# EUROPEAN PATENT SPECIFICATION

(11) **EP 2 969 342 B1**
(45) Date of publication and mention of the grant of the patent: **12.05.2021**
(21) Application number: 14774411.4
(22) Date of filing: 13.03.2014
(51) Int. Cl.: B23D 49/16, B25D 17/24, B25D 17/04, B23D 51/02, B25F 5/00

(54) **POWER HAND TOOL WITH VIBRATION ISOLATION**
STROMBETRIEBENES HANDWERKZEUG MIT SCHWINGUNGSISOLIERUNG
OUTIL À MAIN ÉLECTRIQUE À ISOLEMENT DE VIBRATIONS

(30) Priority: 14.03.2013 US 201361784186 P; 28.03.2013 US 201361806289 P
(43) Date of publication of application: 20.01.2016
(73) Proprietor: Robert Bosch GmbH, 70442 Stuttgart (DE)
(72) Inventor: HAMAN, Brian, Chicago, IL 60601 (US); RUIZ, Hector, Westmont, IL 60559 (US); OBERHEIM, Stephen, Des Plaines, IL 60016 (US); POZGAY, David, Evanston, IL 60201 (US)
(86) International application number: PCT/US2014/026008
(87) International publication number: WO 2014/160190

(56) References cited:
- EP-A1- 1 652 633
- EP-A1- 2 253 430
- EP-A1- 2 266 762
- EP-A2- 1 736 283
- US-A- 5 927 407
- US-A1- 2003 132 016
- US-A1- 2006 219 418
- US-A1- 2010 126 746
- US-A1- 2012 111 595

## Description

### Field

This disclosure relates to power hand tools and more specifically to power hand tools which create vibration.

### Background

Reciprocating tools that are motor driven, such as saber saws, larger reciprocating saws and the like are usually driven by electric motors that have a rotating output shaft. The rotating motion is translated into reciprocating motion of a working shaft for moving a saw blade or the like in a reciprocating manner. Various approaches have been developed which translate the rotational motion into reciprocating motion. A common approach is the incorporation of a wobble plate drive.

A "wobble plate" assembly is a configuration wherein a shaft has an angled portion on which an arm is mounted through a ball bearing assembly. The arm is slidingly positioned within a portion of a plunger assembly. As the angled portion of the shaft rotates, the arm translates the rotation of the shaft into a reciprocating movement of the plunger assembly.

As the working shaft of the plunger assembly moves along an axis, a significant amount of momentum is created. All of this momentum is absorbed by the tool as the plunger assembly reverses direction. Thus, a user of a reciprocating tool incorporating a wobble plate drive must contend with a powerfully vibrating device. In order to make such reciprocating tools more controllable, reciprocating tools such as the device in the '729 patent incorporate a counterweight which is driven by a secondary wobble plate in a direction opposite to the direction of the plunger assembly. While the incorporation of a secondary wobble plate and counterweight is effective, a user is still exposed to a significant amount of undesired vibration.

Other devices for changing rotational movement to reciprocating movement include scotch yoke mechanism and crank sliders. These systems also suffer from undesired vibration.

In the field of rotary hammers, some effort has been made to reduce the vibrations experienced by a user by decoupling the handle from the tool. The isolators only isolate the handle from impacts in one direction. Since reciprocating saws have a large reciprocating mass that is accelerated and decelerated in both the forward and reverse direction, large vibration forces are generated in both the forward and reverse direction.

Some reciprocating saws have been developed which attempt to isolate the handle by trapping an isolating elastomer between the handle and the tool housing. A certain level of isolation has been achieved, but additional isolation is desired.

Other hand power tools also create vibrations which can be injurious to a user, particularly when the power tool is used over prolonged periods. Such tools include grinders, sanders, routers, and other rotary, oscillating, and reciprocating tools.

A need exists for a power hand tool which reduces vibration experienced by a user. A further need exists for a power hand tool which reduces vibration which does not rely upon bulky assemblies. A system which reduces vibrations in a power hand tool while reducing costs associated with vibration reduction would be further beneficial.
Prior art document 1: EP 2 253 430 A1
Prior art document 2: US 2003/132016 A1

### Summary

In one embodiment, a power hand tool according to claim 1 of the present application is provided.

### Brief Description of the Drawings

FIG. 1 depicts a side perspective view of a reciprocating tool incorporating a vibration isolation system in accordance with principles of the disclosure;

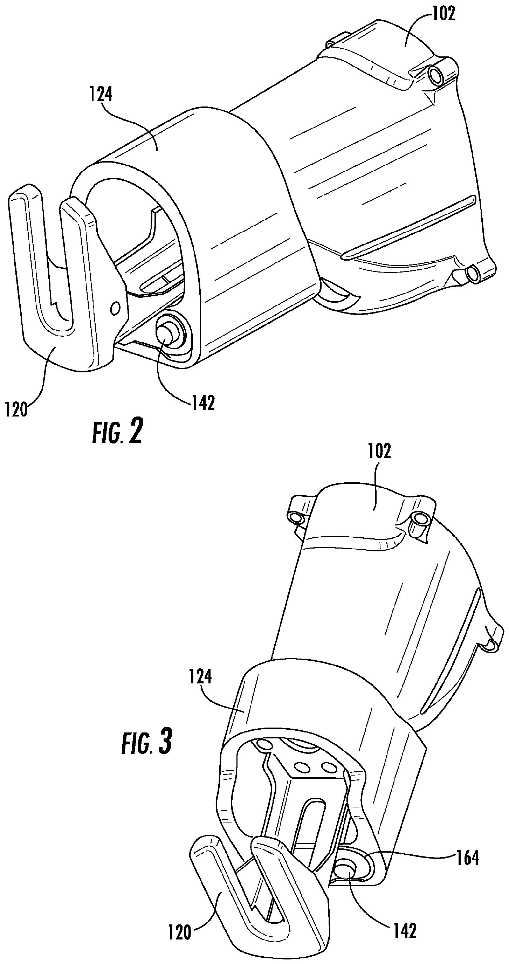

FIG. 2 depicts a side cross-sectional view of the isolation system of FIG. 1;
FIG. 3 depicts a side cross-sectional view of the isolation system of FIG. 1;
FIG. 4 depicts a bottom cross-sectional view of the isolation system of FIG. 1;
FIG. 5 depicts a side cross-sectional view of a vibration isolation system that can be used with the tool of FIG. 1;
FIG. 6 depicts a side cross-sectional view of a vibration isolation system that can be used with the tool of FIG. 1;
FIGs. 7-11 depict views of a vibration isolation system that can be used with the tool of FIG. 1 which incorporates elastomer pads;
FIGs. 12-15 depict views of a vibration isolation system that can be used with the tool of FIG. 1 which incorporates elastomer cylinders;
FIGs. 16-19 depict isolation systems incorporating isolators of different shapes and orientations to provide modified stiffness characteristics;
FIGs. 20-21 depicts an isolation system which includes differently shaped isolators to provide a varying stiffness depending upon the usage of the tool;
FIGs. 22-24 depict embodiments wherein an isolator is shaped in order to provide different stiffness characteristics by forming voids within the isolator;
FIGs. 25-28 depict an embodiment which includes press fit components for ease of construction;
FIGs. 29-30 depict an embodiment of an isolation system which traps isolator pads between two housing portions for ease of manufacturing;
FIGs. 31-32 depict an embodiment of an isolation system wherein an elastomeric pad is bonded to pieces of metal to form an assembly which is easily mounted to a tool housing;
FIGs. 33-34 depict an embodiment of an isolation system wherein an elastomeric pad is bonded to a sled housing on one side and a piece of metal on the other side to form an assembly which is easily mounted to a tool housing
FIGs. 35-36 depict an embodiment of an isolation system wherein an elastomeric pad is formed with locking tabs which are easily mounted to a sled housing
FIGs. 37-38 depict an embodiment of an isolation system wherein a port is formed in the sled and isolation pad to provide for dust removal capability;
FIG. 39 depicts an isolation system which includes a quick release button;
FIGs. 40-42 depict an isolation system that includes a button which allows the isolation system to be quickly activated/deactivated;
FIGs. 43-45 depict an embodiment of an isolation system wherein a used can easily adjust the stiffness of the sytem;
FIG. 46 depicts an embodiment of an isolation system wherein an elastomeric pad in the form of bars is formed on a tool housing and a rubber boot encloses the elastomer pad;
FIG. 47 depicts an embodiment of an isolation system wherein an elastomeric pad in the form of cylinders is formed on a tool housing and a rubber boot encloses the elastomer pad housing;
FIG. 48 depicts an embodiment of an isolation system which is formed as a one piece insert molded system;
FIG. 49 depicts an embodiment of an isolation system which includes thermal protection;
FIG. 50 depicts an embodiment of an isolation system wherein a rubber boot encloses the isolation system; and
FIGs. 51-54 show the isolation systems disclosed herein in use with various types of hand power tools.

### Description

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art to which this disclosure pertains.

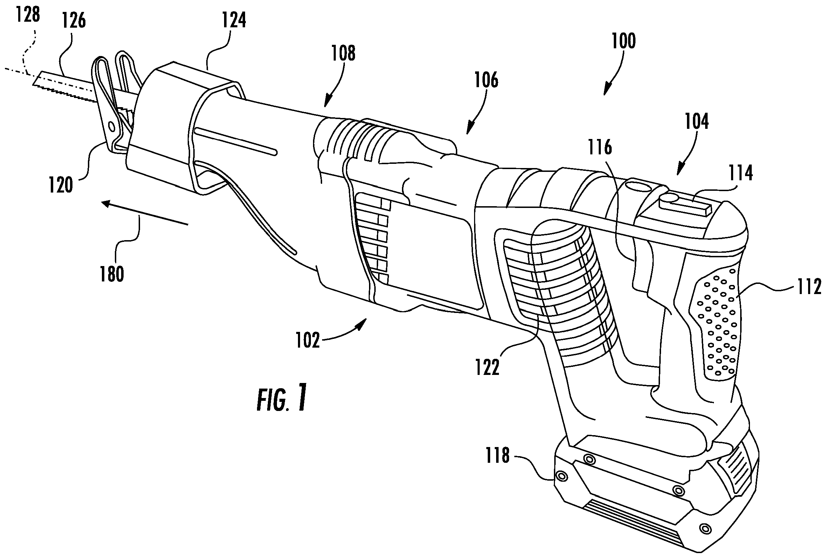

FIG. 1 depicts a reciprocating saw 100 including an outer housing 102 which includes a handle portion 104, a motor portion 106, and a nose portion 108. The handle portion 104 includes a handle 112, a dual-speed switch 114, and a variable speed trigger 116. The handle portion 104 is configured to removably receive a battery pack 118 which in some embodiments is replaced by a corded power supply.

The nose portion 108 includes a grip 124 which includes an outer surface shaped to allow a user to grip the tool 100 while the tool 100 is in use. A foot plate assembly 120 is located forwardly of the nose portion 108.

The motor portion 106 includes a number of ventilation ports 122 which are used to provide cooling air to a motor (not shown). The motor (not shown) rotatably drives a wobble plate assembly (not shown) which in turn drives a working shaft connected to a chuck assembly (not shown) which removably supports a saw blade 126. The saw blade 126 is driven along a plunger axis 128 by the working shaft which reciprocates along the plunger axis 128.

The grip 124 includes a sled 140. The sled 140 is supported by the housing 102 by two base members in the form of pins 142/144 which are rigidly connected to the housing 102. The pins 142/144 extend through a respective rear washer supporting isolator 146/148 each of which is fixedly connected to a respective rear isolator 150/152. The isolators 150/152 are positioned within a rear isolator cavity 154.

The pins 142 /144 further extend through a respective one of a pair of support bushings 156/158 which are pressed into the sled 140. The support bushings 156/158 are positioned between the rear isolators 150/152 and a pair of front isolators 160/162. The front isolators 160/162 are located within a front cavity 168 of the sled 140. A pair of front washer supporting isolators 164/166 are fixedly attached to a respective one of the pins 142/144 at a location forward of the front isolators 160/162. These bushings 156/158 provide rigidity in to tool motion in both directions that are transverse to the front to back axis. This acts to prevent rocking of the tool body as well as increases control of the tool body during cutting. A front connector 170 extends between the pins 142/144 at a location between the front washer supporting isolators 164/166 and the front isolators 160/162. The front ends of the pins 142/144 are not attached to any other part of the reciprocating saw 100.

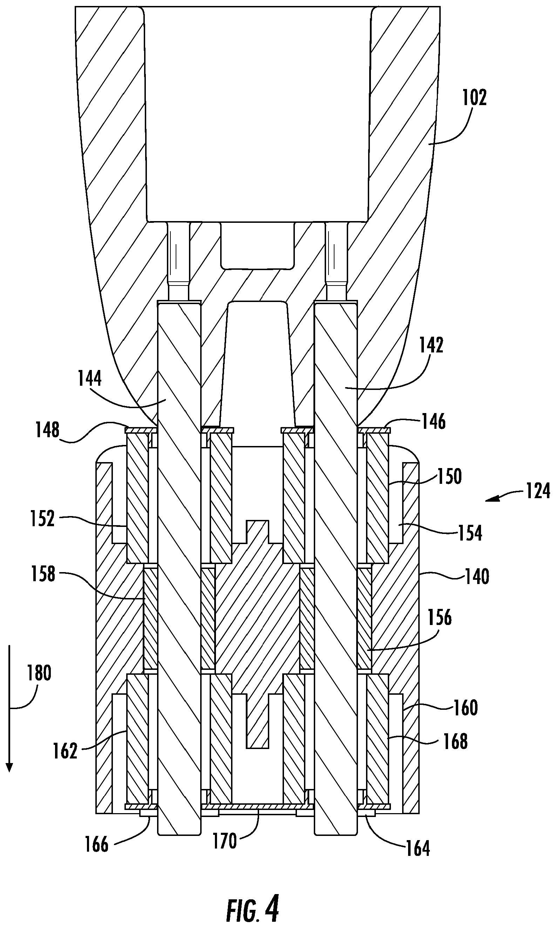

In operation, the reciprocating tool 100 generates vibrations along the plunger axis 128 as the working shaft reciprocates. The vibrations are isolated, however, by the grip 124. Specifically, as the tool 100 moves in the direction of the arrow 180 of FIGs. 1 and 4, the sled 124 does not initially move since the sled 124 is not fixedly connected to the housing 102 in which the working shaft reciprocates. The housing 102 thus pushes against the rear washer supporting isolators 146/148. Movement of the rear washer supporting isolators 146/148 generates a force against the rear isolators 150/152. The rear isolators 150/152 are made of an elastomer, a spring, or the like. Elastomers provide a given spring rate but also have a damping value which allows for a certain level of energy dissipation and is well suited for eliminating / reducing the chances of vibration amplification at the speeds at which the reciprocating saw 100 operates. Various springs also have a range of damping characteristics which can eliminate / reduce the chances of vibration amplification.

Consequently, the rear isolators 150/152 absorb a desired amount of the energy of the vibration, and also reduce the movement of the grip 124 in the direction of the arrow 180. Depending upon the particular embodiment, the housing 102 may begin to move in a direction opposite to the arrow 180 prior to movement of the sled in the direction of the arrow 180.

Once the reciprocating tool 100 reaches the end of a stroke and begins to move in the direction opposite to the arrow 180, the pins 142/144 move rearwardly with respect to the sled 140. The rearward movement of the pins 142/144 forces the front washer supporting isolators 164/166 against the front connector 170 which in turn presses against the front isolators 160/162. The front isolators 160/162 are also made of an elastomer, a spring, or the like. Accordingly, as the front connector 170 presses against the front isolators 160/162, the front isolators 160/162 compress, thereby absorbing the desired amount of energy of the vibration, and also reducing the movement of the grip 124 in the direction opposite to the arrow 180. The front connector 170 spreads the force more evenly across the front isolators 160/162 even in situations where the load is generated more heavily on one side of the grip.

The net effect of this isolated system is that it allows the tool to vibrate back and forth but the pin - bushing - isolator system decouples the user's hands from the vibration in axis of the pins. While the isolation system in the embodiment of FIG. 1 was described with respect to the grip, in some embodiments the isolation system is alternatively or additionally incorporated into the handle 112.

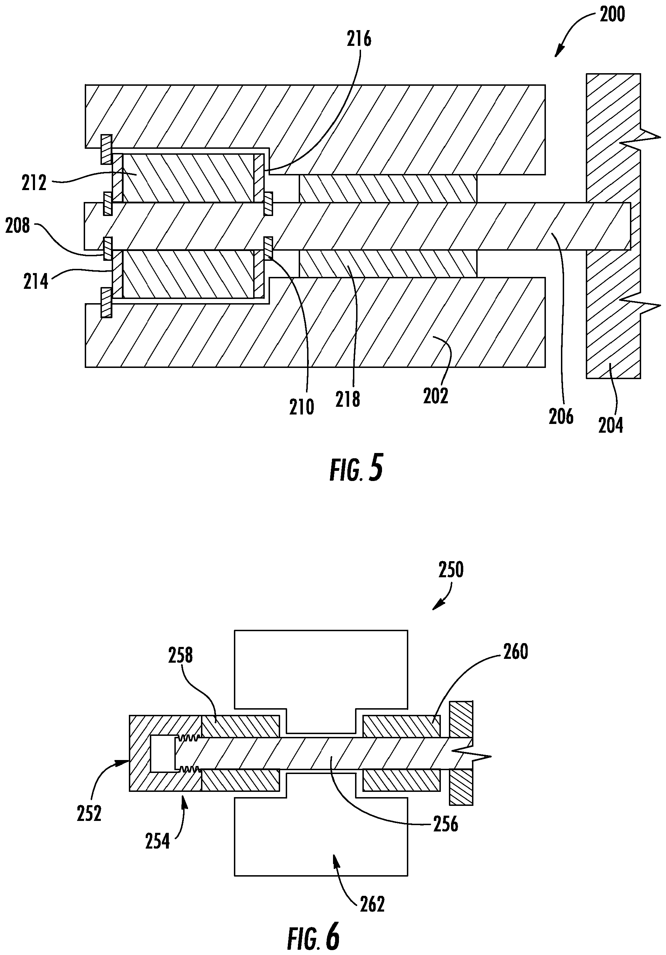

One or both of the grip/handle isolation systems in different embodiments may be modified for a particular application. By way of example, FIG. 5 depicts another isolator that in different embodiments is incorporated into one or both of the grip and handle of FIG. 1. The isolation system 200 of FIG. 5 includes a sled 202 which is spaced apart from a housing 204. A pin 206 is fixedly attached to the housing 204 and to a front and rear snap rings 208 and 210, respectively. The snap rings 208 and 210 are separated from an isolator 212 by a pair of washers 214/216. The pin 206 slidingly engages a support bushing 218 which is press-fit within the sled 202. These bushings 218 provide rigidity in to tool motion in both directions that are transverse to the front to back axis. This acts to prevent rocking of the tool body as well as increases control of the tool body during cutting.

The snap rings 208 and 210 on the pin 206 push/pull the washers 214/216, which in turn acts to compress the isolator 212 in response to the vibrating movement of the pin 206. In this embodiment, one less isolator is needed on each pin as compared to the embodiment of FIG. 1. While only a single pin 206 is depicted in FIG. 5, more pins may be present in the system.

Additionally, while FIGs. 1 and 5 depict grips which extend about the plunge axis, the isolators can also be used to isolate two ends of, for example, the handle 112. Thus, isolators are readily employed in both grips and handles.

In some embodiments, the "stiffness" of the isolating system can be modified. FIG. 6 depicts an isolation system 250 which includes a set screw 252 in a threaded end portion 254 of a pin 256. The set screw 252 can be used to modify the compression on the isolators 258/260 to provide a desired amount of vibration isolation of the sled 262.

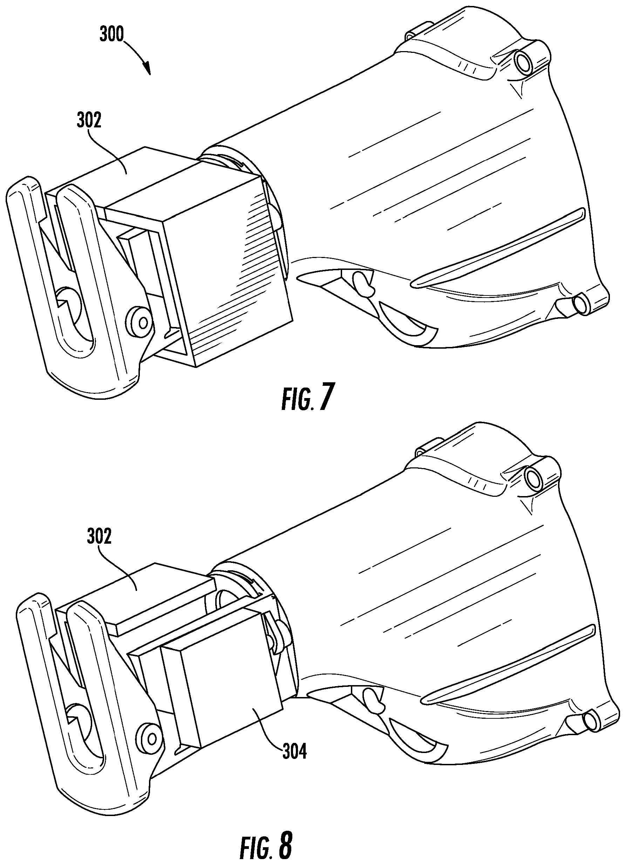

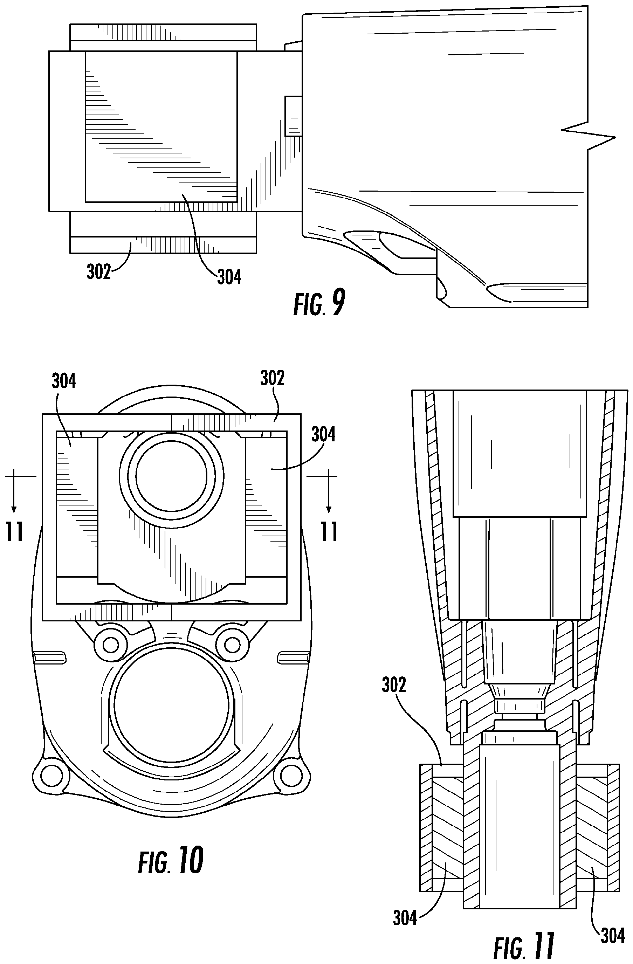

FIGs 7-11 depict a vibrations isolation system 300 which includes an outer elastomer sled 302 and, in this embodiment, a pair of inner elastomer pads 304. In other embodiments, springs are used in place of the elastomer pads 304. The elastomer sled and pads/springs provide three axes of vibration isolation. In the front-to-back direction the system provides shear loading of the pads/springs. In the side-to-side direction, the system provides compressive/tensile loading of the pads/springs. Finally, in the up-down direction, the system provides shear loading of the pads/springs.

While the outer elastomer sled 302 is depicted as generally rectangular, in other embodiments the sled has a more contoured shape, such as the shape of the sled in the grip 124. The pads 304 are also contoured to fit within the sled. In embodiments incorporating springs, the spring dimensions are selected to fit within the sled. The dimensions, durometer, and damping properties of the elastomer pads/springs and sled are selected in order to minimize vibration being passed on from the tool to the user's hands.

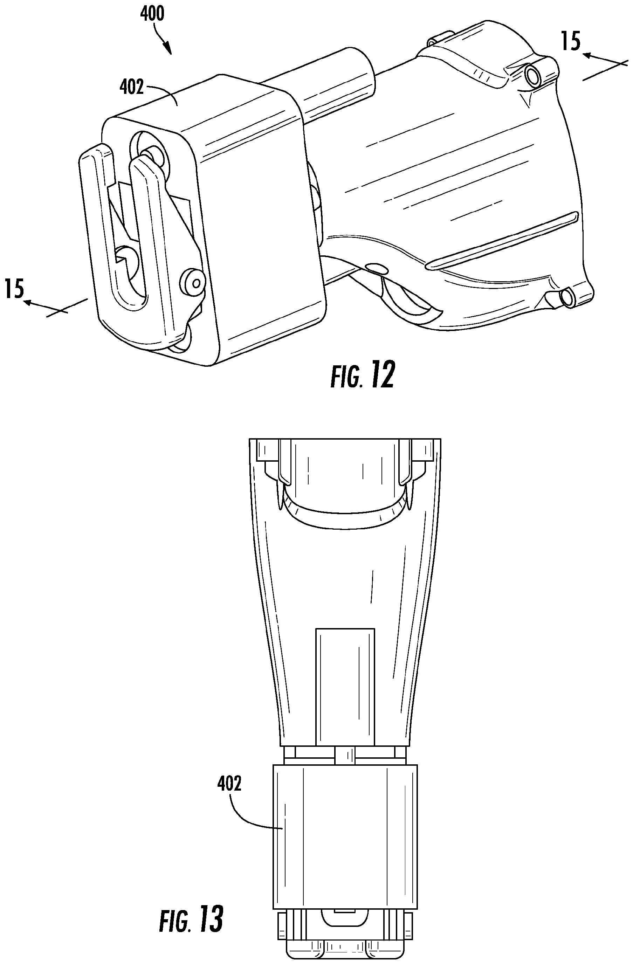

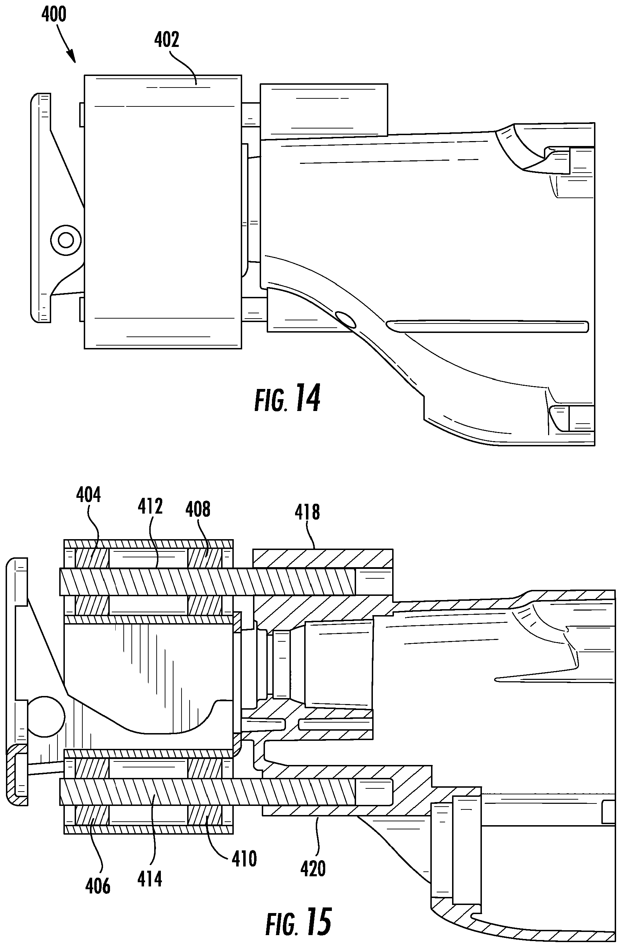

FIGs 12-15 depict a vibrations isolation system 400 which includes an outer elastomer sled 402. The sled 402 rides upon four isolators 404, 406, 408, and 410 which may be elastomer cylindrical tubes or springs. The isolators 404/408 are supported by a pin 412 while the isolators 406/410 are supported by a pin 414. The pin 412 is rigidly connected to the housing within a receptacle 418 and the pin 414 is rigidly connected to the housing within a receptacle 420.

The elastomer sled 402 and isolators provide three axes of vibration isolation. In the front-to-back direction the system provides shear loading of the isolators. In the side-to-side direction, the system provides compressive/tensile loading of the isolators. Finally, in the up-down direction, the system provides shear loading of the isolators. The dimensions, durometer, and damping properties of the elastomer tubes/springs and sled are selected in order to minimize vibration being passed on from the tool to the user's hands.

The amount of vibration isolation in a particular implementation is optimized in various manners. Vibration isolation is optimized by way of a combination of material properties and geometries. For example, the stiffness provided by the elastomer pad 304 in FIG. 8 can be modified by selecting, for a given size and shape of the pad 304, a material which provides the desired stiffness. For a given material, stiffness can be modified by increasing or decreasing the dimensions of the material (length, width, and thickness).

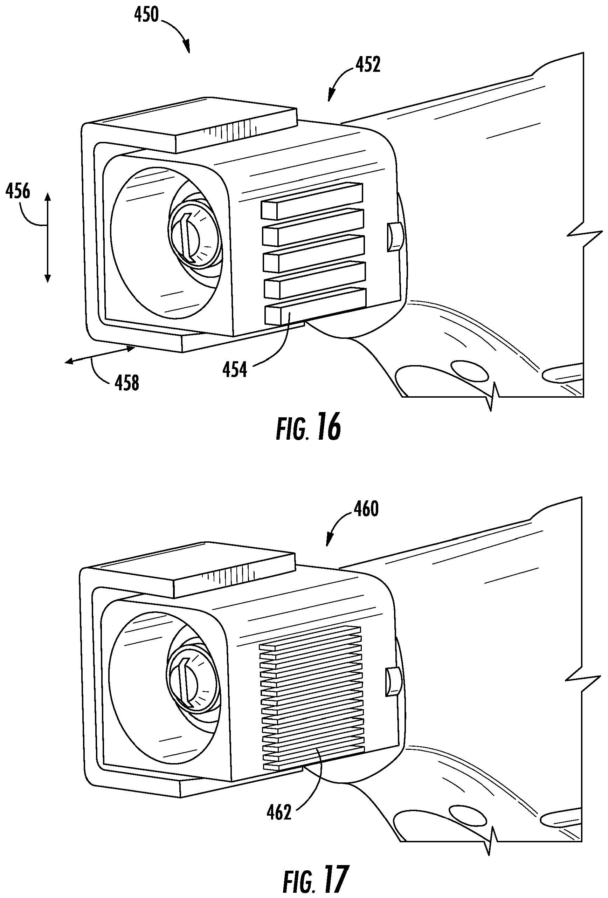

FIG. 16 depicts a power hand tool 450 which is similar to the power hand tool on which the pad 304 is mounted. The pad 452 which is used in the power hand tool 450 is made from the same material as the pad 304. The stiffness of the pad 452 is modified, however, since the pad 452 is embodied as a group of bars 454. The bars 454 are oriented such that the stiffness of the pad 452 along the axis 456 is much less than the stiffness of the pad 304, while the stiffness of the pad 452 along the axis 458 is only slightly less than the stiffness of the pad 304.

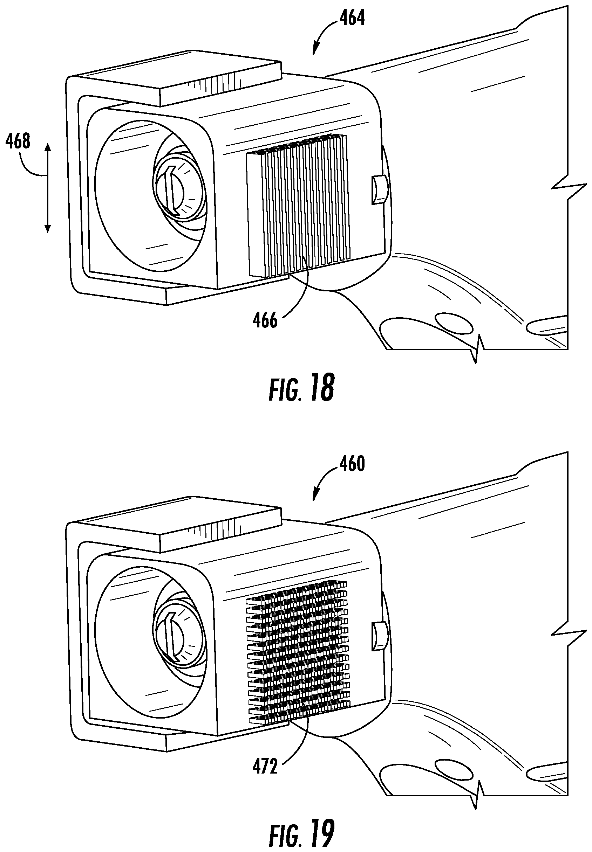

By modifying the size and numbers of the elastomeric bars 452, the stiffness characteristics can be further modified. By way of example, the pad 460 in FIG. 17 includes stiffening components in the form of bars 462 which are thinner than the bars 452, thus modifying the stiffness of the pad 460. The pad 464 in FIG. 18 includes stiffening components in the form of elastomeric bars 466 which have been oriented to provide enhanced stiffness along the axis 468. Thus, the orientation of the pad can be modified to provide the desired stiffness characteristics.

In some embodiments, it may be desired to have reduced stiffness along two axes of the power hand tool. FIG. 19 depicts an elastomeric pad 470 which is constructed with a group stiffening components in the form of cylinders 472. The cylinders reduce the stiffness along all axes of the tool, allowing an overly stiff elastomer to be used without maintaining a high stiffness in the pad 470.

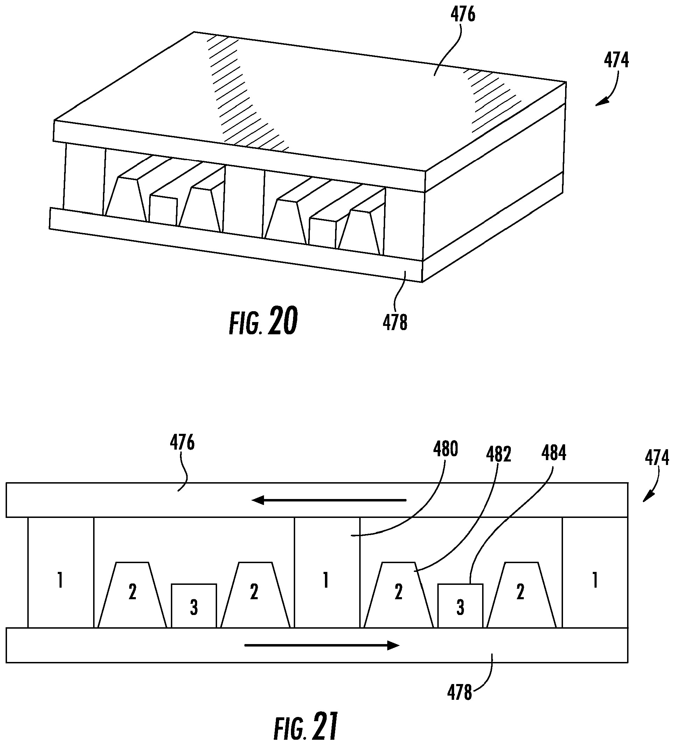

Additional stiffness optimization is realized in some embodiments by providing multiple geometries of stiffening components within a single pad. By way of example, FIGs. 20-21 depict an elastomeric pad 474 positioned between a sled 476 and a housing 478 of a power hand tool. The pad 474 includes connecting bars 480 and truncated bars 482. Each of the truncated bars 482 is located between a connecting bar 480 and a stiffening rib 484 of the housing 478.

The embodiment of FIGs. 20-21 provide varying isolator pad 474 geometry for a shear loaded system that allows for progressively stiffening the elastomer pad 474 upon larger deflections. Small deflections of the system result in a stiffness defined only by one set of pads, the connector pads 480, which provides a very loose (non-stiff) system. Larger deflections lead to the connector pads 480 bottoming out on the truncated bars 482 thereby increasing the stiffness of the system. After reaching a certain deflection, the pads 480 and 482 bottom out on the rigid metal ribs 484 and the system becomes significantly more stiff. This progressive increase in stiffness limits the user's looseness of the handle when high loads are applied while still allowing for ideal isolation properties under low loads.

The embodiment of FIGs. 20-21 functions in a similar manner in compression. In cases of small displacements, the connector pads 480 are the only isolator set compressing. Larger displacements leads to the sled 476, which in one embodiment is a metal plate, coming into contact with the truncated bars 482 and thus stiffening the system. Under even larger displacements, the sled 476 comes in contact with the rigid metal ribs 484 and rigidly bottoms out preventing additional displacement. This embodiment thus shows a progressively stiffening isolation system on a power hand tool.

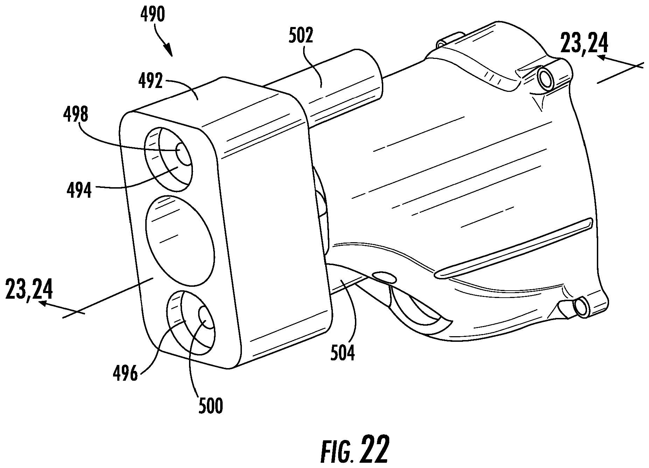

The use of different geometries or shape factors can also be used with isolation systems similar to the isolation system of FIGs. 12-15. By way of example, FIG. 22 depicts a vibrations isolation system 490 which includes an outer elastomer sled 492. The sled 402 rides upon two elastomer cylindrical tubes 494 and 496. The elastomer cylindrical tube 494 is slidingly supported by a pin 498 while the elastomer cylindrical tube 496 is slidingly supported by a pin 500. The pin 494 is rigidly connected to the housing within a receptacle 502 and the pin 496 is rigidly connected to the housing within a receptacle 504.

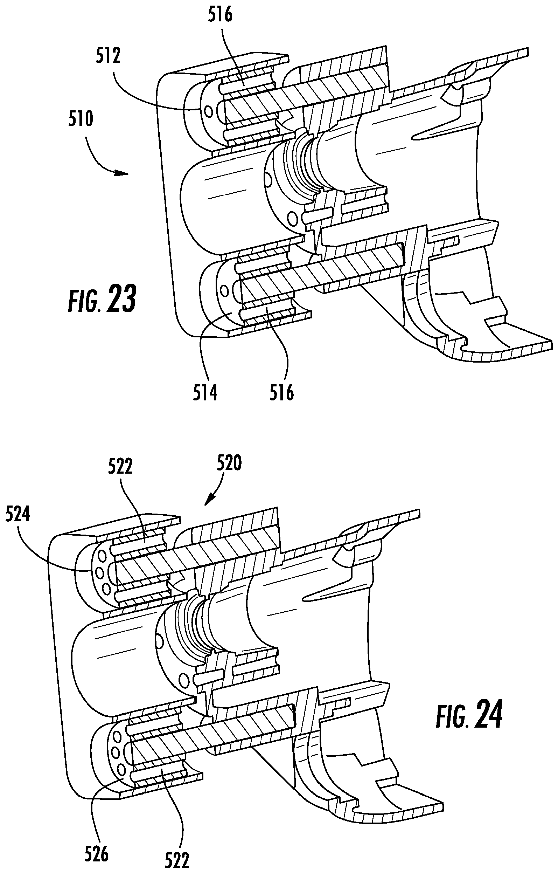

The isolation system 510 of FIG. 23 is substantially the same as the isolation system 490 of FIG. 22. The difference is that the elastomer cylindrical tubes 512/514 include a plurality of bores 516. The bores 516 modify the stiffness longitudinally and radially. The positioning of the bores 516 and the surrounding structure determine the extent of the modification radially and longitudinally. For example, the tubes 512/514 are configured in one embodiment to spread an applied load evenly across the ends of the cylinders. Thus, the location of the bores 516 is less important as compared to the number of bores. Radially, however, the manner in which force is transferred about the bores 516 is dependent upon the positioning of the bores 516.

FIG. 24 depicts an isolation system 520 which is similar to the system 510 of FIG. 23. The main difference is that additional stiffness modification is accomplished by providing an increased number of bores 522 through the elastomer cylindrical tubes 524/526.

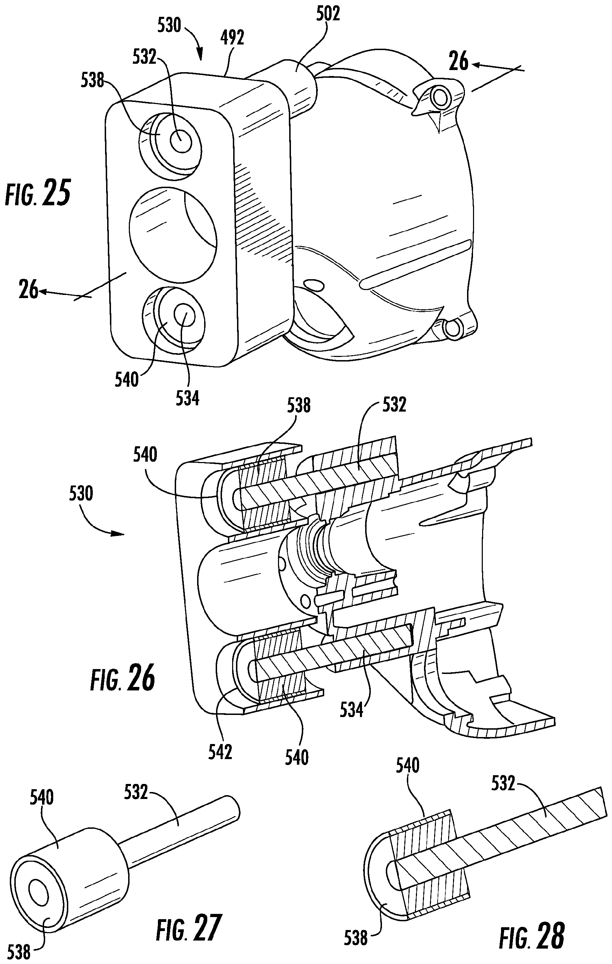

While various embodiments of isolation systems have been depicted above, the principles set forth in each of the specific embodiments are incorporated in different combinations in other embodiments. Additional modifications are also possible so as to provide additional benefits for particular embodiments. Thus, additional components may be added to ease manufacturing. FIGs. 25-28, for example, depict an isolation system 530 which includes a sled supported by two pins 532/534 which are attached to a housing 536. Two elastomer cylinders 538/540 are bonded to the pins 532/534 and each cylinder 538/540 has a tube 542/544 bonded to its outer diameter.

During manufacturing, the elastomer cylinders 538/540 are bonded to the pins 532/534 on the inner diameter of the elastomer cylinders. The isolator then has a tube 542/544 bonded to its outer diameter. This method of manufacturing facilitates production assembly of the sled system. A press fit of the pins 532/534 to the housing and a press fit of the metal tube to corresponding bores in the anti-vibration handle allow the system to be secured in a decoupled fashion through the isolators.

The above described embodiments can be manufactured in a variety of processes. In different embodiments, the location and quantity of tubeform isolators is varied, and the location and quantity of isolator pads is varied as well. For example, while several embodiments showing tubes in an "over/under" configuration have been shown, other combinations and positioning of the tubes are incorporated in other embodiments.

Similarly, some of the above described embodiments depict two isolator pads, one located on the left and one located on the right side of the output shaft. In other embodiments, other combinations and positioning of the pads are incorporated. One such embodiment has pads located above and below the shaft, and another embodiment has three or four pads located equidistant about the shaft.

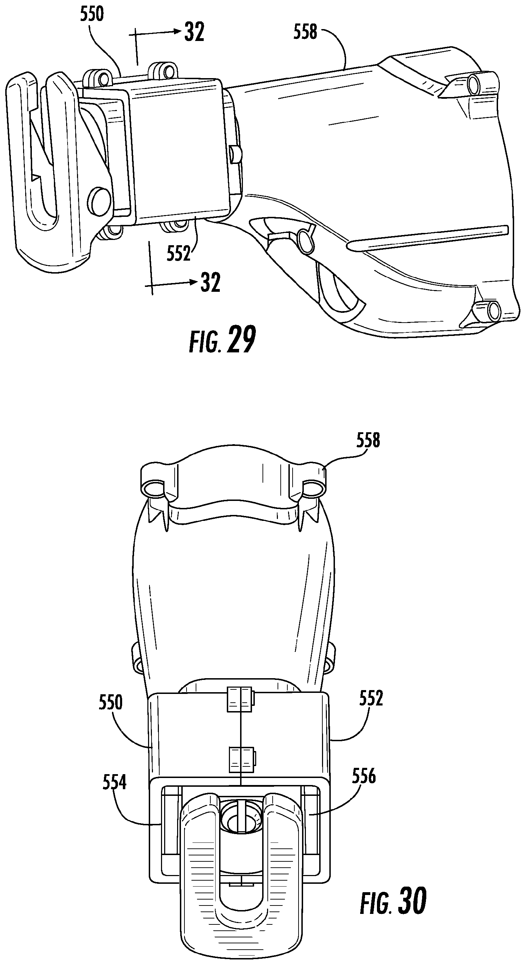

To facilitate manufacture of some embodiments, a clamshell sled is used. FIGs. 29-30 depict an isolation system including two housings 550/552 which, when fastened together, effectively trap isolator pads 554/556 between the sled housings 550/552 and the housing 558 of the power tool.

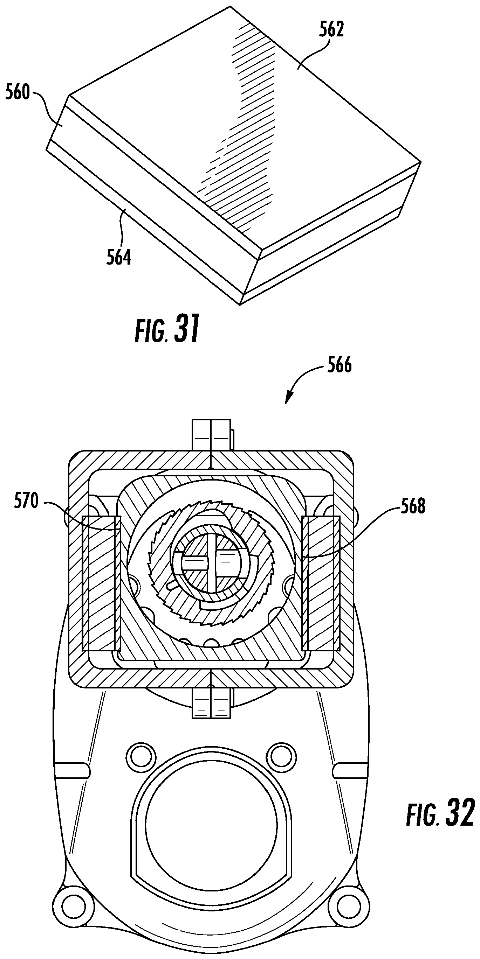

In some embodiments, an elastomer pad 560 (see FIG. 31) is bonded to pieces of metal 562/564. This subassembly is easily assembled in an anti-vibration handle 566 such as by mating with corresponding pockets/recesses 568/570 in the handle and housing to rigidly link the metal pads to the housing and handle while still allowing for the decoupling of the handle from the tool itself as shown in FIG. 32.

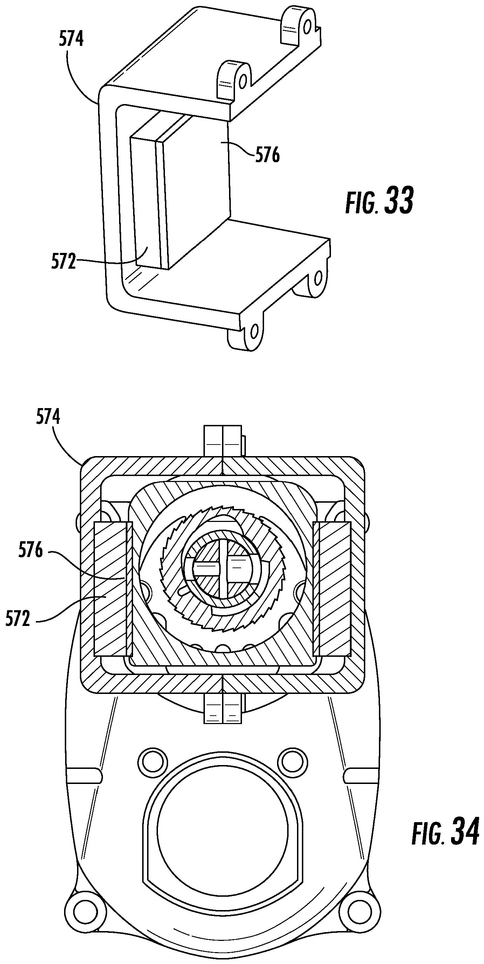

In another embodiment (see FIG. 33), an elastomer pad 572 is directly molded onto the sled/handle housing 574 on one side of the elastomer and bonded to a metal pad 576 on the other side of the elastomer pad 572 to assist in assembling the handle to the power tool housing as depicted in FIG. 34.

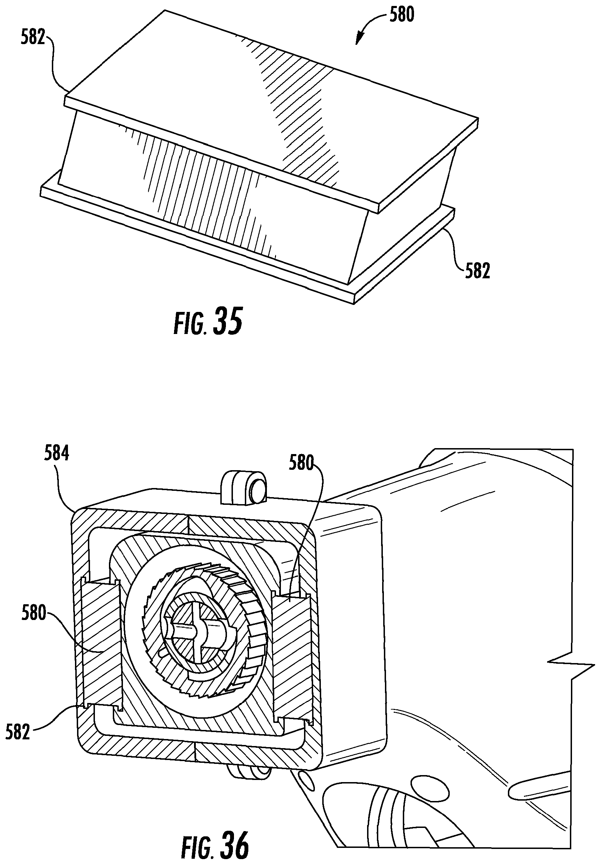

FIGs. 35-36 depict an embodiment which does not require bonding. The elastomer pads 580 are formed with securing tabs 582. When the elastomer pads 580 are inserted in the housing 584, the protruding tabs 582 lock in the undercut portion of the housing & handle 584. While one geometry of locking tabs is depicted, other geometries are used in other embodiments.

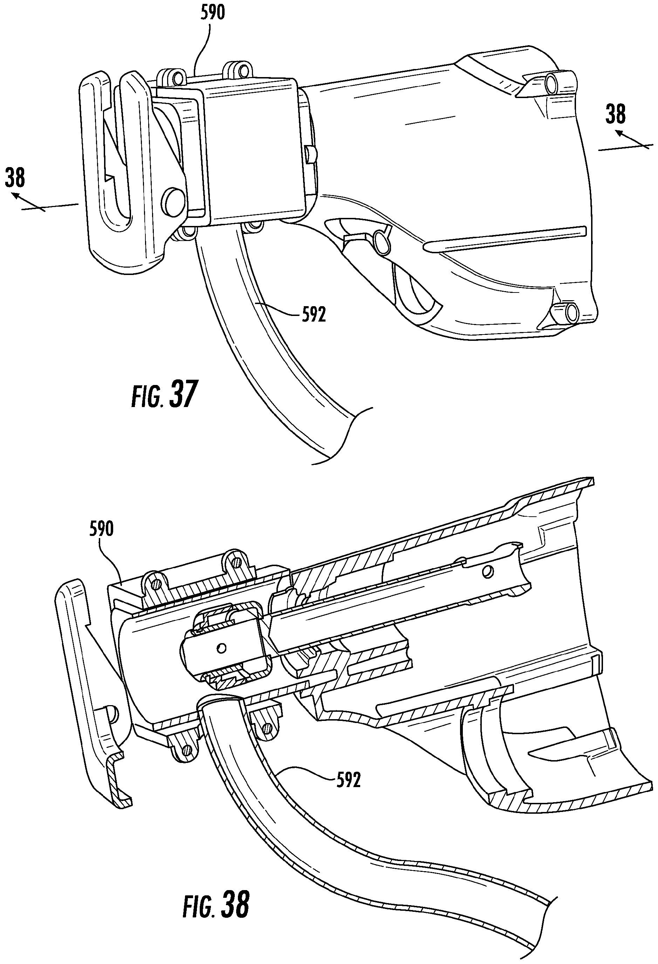

The above described embodiments are modified to provide for additional functionality in some embodiments. FIGs. 37 and 38 depict an isolation system 590 that is modified to provide a port through which a dust removal hose 592 draws a suction. The isolation system 590 in some embodiments is modified in shape and location to optimize collection of dust, such as by enclosing the blade holder and a portion of the blade in a portion of the tool housing or housing of the isolation system 590.

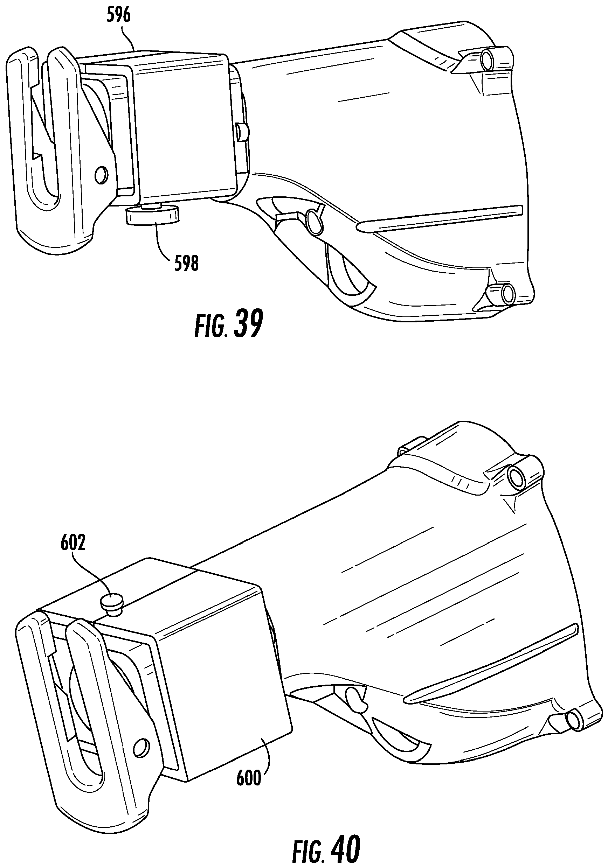

While some of the clamshell embodiments depicted above include a screw or threaded fastener to attach the clamshells together, some embodiments provide for a quick release mechanism. FIG. 39 depicts an isolation system 596 which includes a quick-release button 598 which provides the user with a method for quickly removing the front handle/isolation system 596. This embodiment is desirable for situations where the user is working in tight areas that the front handle may be preventing the user from being able to access.

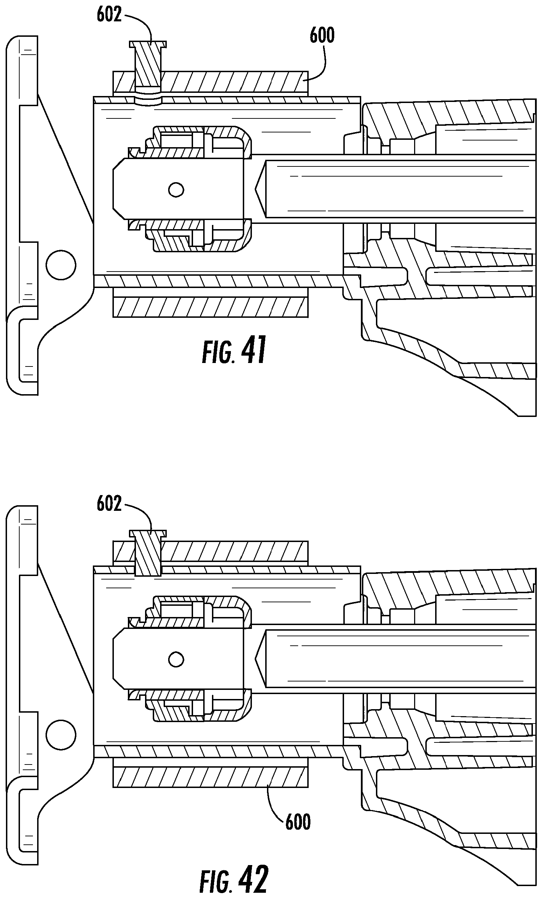

FIGs. 40-41 depict an isolation system 600 which includes an activation button 602 which provides the user with a method for quickly activating/deactivating the handle/isolation system 600. This embodiment is desirable for situations where the user does not desire to have the decoupled front handle/system (vibration isolated handle) 600. The activation button 602 can be engaged/disengaged to switch between coupled handle (no anti-vibration as in FIG. 42) and decoupled handle (isolators are loaded and anti-vibration system is engaged as in FIG. 41).

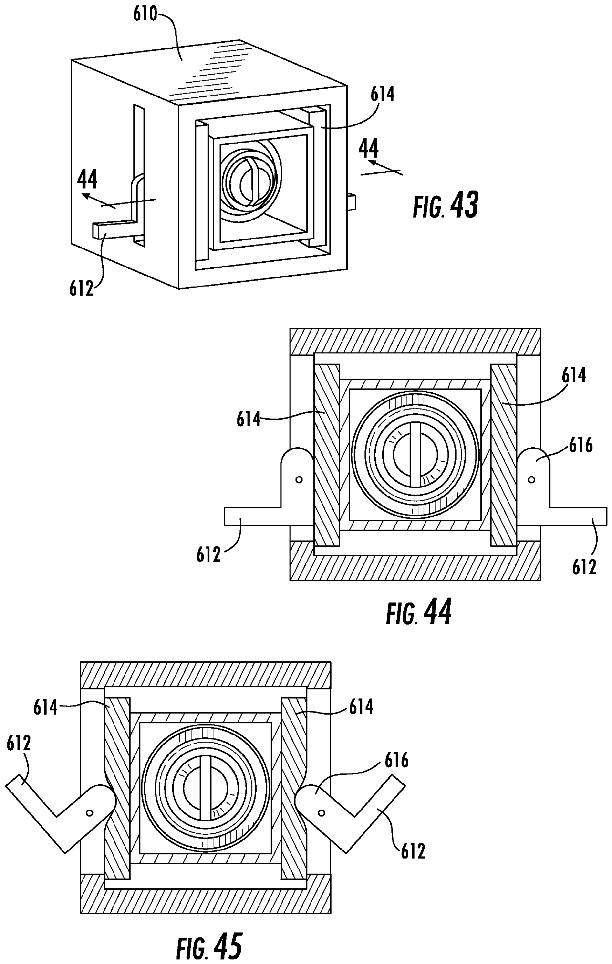

In the above described embodiments, a further modification is to make the stiffness of the system user changeable. By way of example, FIGs. 43-45 depict an isolation system 610 that includes levers 612. By moving the levers between the full isolation position of FIG. 44 and the reduced isolation configuration of FIG. 45, the stiffness of the system 610 is increased by reducing the effectiveness of the elastomer pads 614 by pressing the ends 616 of the levers 612 into the pads 614. This variable precompression will drive the system stiffness and thus the system's isolation efficiency.

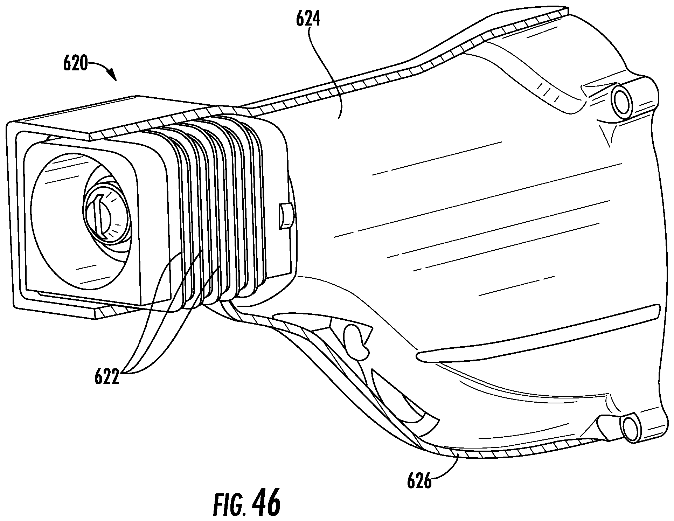

The above described embodiments may further be modified to present a lower profile of the vibration isolation system. For example, many of the above described embodiments depict the vibration isolation system as a forward handle or grip that is positioned about the tool housing. FIG. 46 depicts a vibration isolation system 620 which includes rubber or elastomer ribs 622 molded onto a metal housing 624 of the tool. A rubber boot 626 is also molded onto the housing 624 at a posterior portion of the boot 626. The anterior portion of the boot 626 interacts with the ribs 622 to provide vibration isolation. The rubber boot 626 acts as a 'skin' of sorts allowing the user to grip onto it but also allowing the rubber ribs 622 to translate during shear loading of them (front to back vibration) as well as bend during compressive loading (side to side / up down). The rubber boot in some embodiments is configured to allow air to move between the boot and the housing for cooling and/or debris removal.

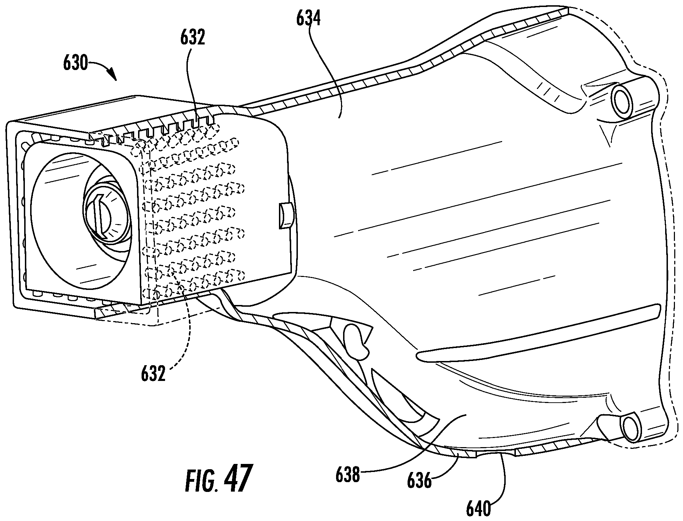

In some embodiments, ribs are formed additionally or alternatively on the boot 626. In some embodiments, the ribs are formed on the exterior of the boot 626 and are directly contacted by the user's hands. Moreover, while the ribs 626 are shown in the form of bars, the shape and spacing may be modified in accordance with the various embodiments described above. For example, FIG. 47 depicts a vibration isolation system 630 that incorporates a pattern of cylinders 632 that are molded to the metal housing 634. The cylinders 632 could additionally or alternatively be molded to the inside or outside of the boot 636.

As can be seen in FIG. 47, there is an air gap 638 between the metal front housing 634 and the boot 636. The boot in this embodiment includes a number of vent holes 640. By molding or otherwise forming vent holes in this area of the exterior boot, the front housing 634 can benefit from convection by means of cool air being allowed to pass over and in contact with the front housing 634. This differs from existing front ends where the boot covers the majority of the front housing surface in order to ensure the user is isolated from the heat generated in the mechanism. With the larger gap 638, vents 640 can be incorporated without the threat of the user injuring themselves due to incidental contact with the hot metal front housing.

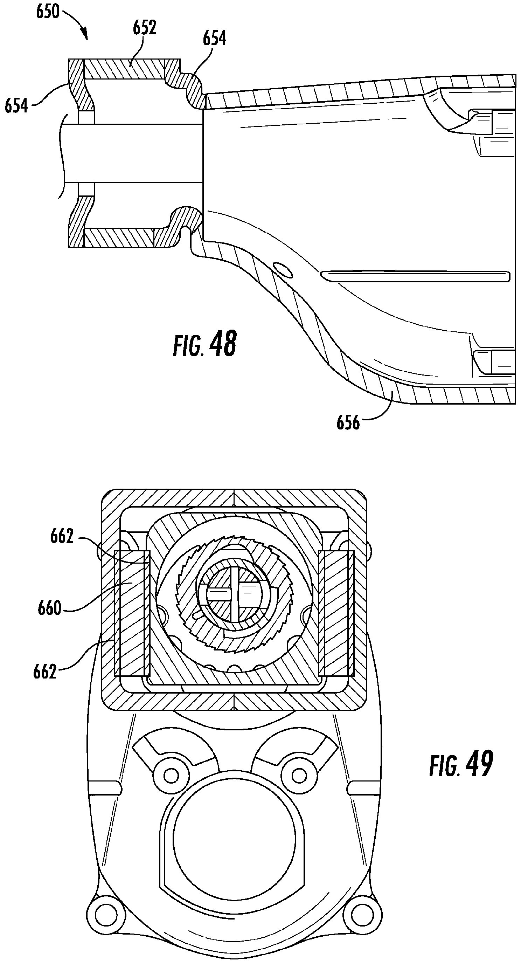

FIG. 48 depicts an isolator system 650 which uses a one piece multiple insert molding operation that combines a rigid Nylon grip surface 652, isolation material, 654, and in some embodiments, includes rubber boot material 656. The isolation material 654 traps the rigid nylon grip surface 652. This allows the user to grab onto a firm surface while still achieving three axes of vibration isolation. The isolation material 654 can then also be bonded to a traditional rubber boot material to make a one piece assembly onto the front housing of the tool, if desired.

Yet another modification that is incorporated into various of the above described embodiments is shown in FIG. 49. During operation, heat is generated in hand power tools. This heat can negatively affect the performance values of the elastomer (stiffness, damping, etc.) and therefore negatively affect the isolation efficiency of the system. Because of this, in some embodiments this heat transfer is mitigated. Thus, FIG. 49 shows elastomer pads 660 with the thermal barriers 662 located on either side of the elastomer pad 660. In different embodiments, thermal barriers 662 are located on both sides of the isolator, or just on the inside surface to minimize the heat transfer to the elastomer from the tool mechanism.

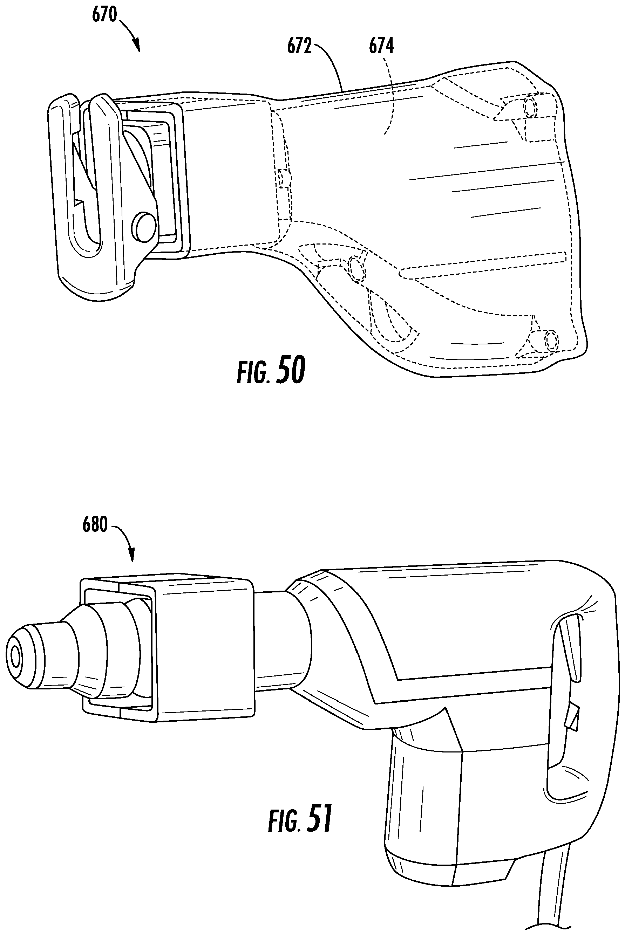

In some of the above described embodiments, a secondary front handle isolated a user from the tool vibrations. Thus, the user would be holding onto this secondary handle from the exterior. The above described embodiments in some instances are modified by wrapping a rubber boot around both the metal front housing and isolated handle in order to achieve a more aesthetically pleasing appearance. By way of example, FIG. 50 depicts an isolation system 670 which is enclosed by a boot 672. The rubber boot 672 flexes in accordance with the relative movements between the metal front housing 674 and the front handle 670.

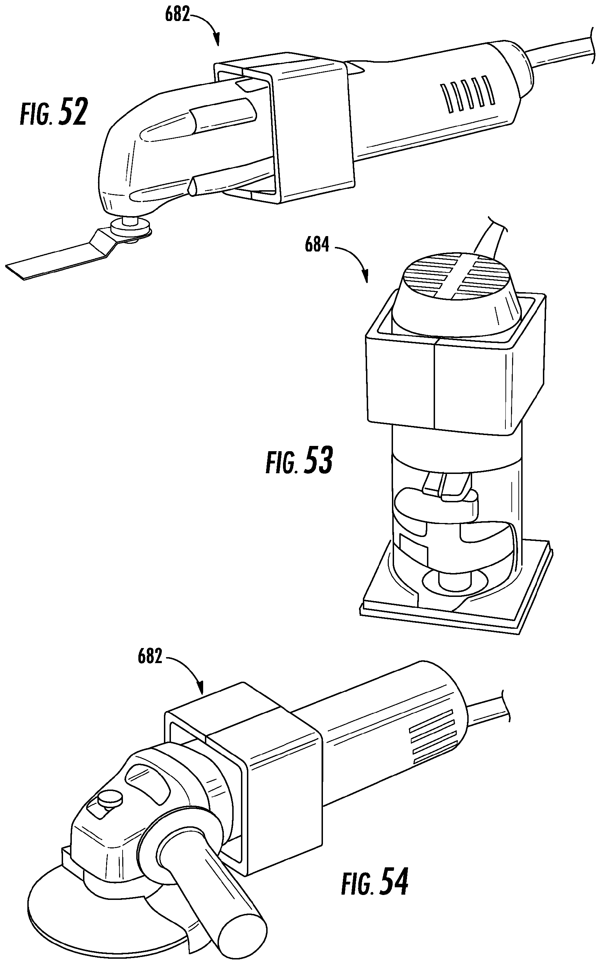

The above described isolation systems have been depicted primarily in use with reciprocating tools. The systems can be used, however, with any desired hand power tool. Thus, FIG. 51 shows an isolation system 680 used with a drill, FIG. 52 shows an isolation system 682 used with an oscillating tool, FIG. 53 shows an isolation system 684 used with a router, and FIG. 54 shows an isolation system 686 used with a grinder. Moreover, while typically a single isolation system has been depicted in connection with a particular tool, in some embodiments multiple isolation systems are incorporated, some of which may be different from other incorporated isolation systems.

## Claims

1. A power hand tool (100), comprising:
a housing (102) containing a working shaft; and
a vibration isolation assembly, the vibration isolation assembly including
at least one base member (142, 144) including a base portion fixed with respect to the housing (102),
at least one vibration isolation portion including a first portion operably
connected to the at least one base member (142, 144), the at least one vibration isolation portion configured to isolate vibration in at least one direction, and
a grip member (124) included in a nose portion (108) of the housing (102) having an outer surface configured to be gripped by a user and an inner surface operably connected to an outer portion of the at least one vibration isolation portion, wherein the grip member (124) includes a sled (140), the sled (140) being supported by the housing (102) by two base members in the form of pins (142, 144) which are rigidly connected to the housing (102), the pins (142, 144) extending through a respective rear washer supporting isolator (146, 148) each of which is fixedly connected to a respective rear isolator (150, 152), the isolators (150, 152) being positioned within a rear isolator cavity (154), wherein the rear washer supporting isolators (146, 148) are adapted to move along a working shaft axis and generate a force against the rear isolators (150, 152), and wherein the grip member (124) is operably connected to an outer radial surface of the isolators (150, 152).

2. The power hand tool of claim 1, further comprising:
a first member fixedly supported by the at least one pin (142, 144) and configured to act upon a first side of the at least one isolator (150, 152) as the at least one pin (142, 144) moves forwardly along the working shaft axis; and
a second member fixedly supported by the at least one pin (142, 144) and configured to act upon a second side of the at least one isolator (150, 152) as the at least one pin (142, 144) moves rearwardly along the working shaft axis.

3. The power hand tool of claim 2, wherein the at least one isolator (150, 152) consists of a single isolator (150, 152).

4. The power hand tool of claim 3, wherein the single isolator (150, 152) comprises a spring.

5. The power hand tool of claim 2, further comprising:
at least one set screw configured to modify compression of the at least one isolator (150, 152).

6. The power hand tool of claim 2, wherein:
the at least one isolator (150, 152) comprises a first and a second isolator (150, 152) axially aligned along the working shaft axis;
the first member is configured to act upon a rearward side of the first isolator (150, 152) as the at least one pin (142, 144) moves forwardly along the working shaft axis; and
the second member is configured to act upon a forward side of the second isolator (150, 152) as the at least one pin (142, 144) moves rearwardly along the working shaft axis.

7. The power hand tool of claim 1, wherein:
the at least one base member (142, 144) comprises at least one pin (142, 144) having a first end fixedly supported by the housing (102);
the at least one vibration isolation portion comprises at least one elastomer tube (512, 514) positioned about the at least one pin (142, 144); and
the grip member (124) is operably connected to an outer radial surface portion of the at least one elastomer tube (512, 514).

8. The power hand tool of claim 7, wherein:
an inner surface of the at least one elastomer tube (512, 514) extends about the at least one pin (142, 144); and
at least one bore (516) extends within the at least one elastomer tube (512, 514) between the inner surface and the outer radial surface portion.

9. The power hand tool of claim 7, wherein:
the at least one elastomer tube (512, 514) is bonded to the at least one pin (142, 144);
a tube is bonded to the outer radial surface portion;
the at least one pin (142, 144) is press-fit into the housing (102); and
the tube is press-fit into a receiving bore (516) in the grip member (124).

10. The power hand tool of claim 1, wherein:
the at least one base member (142, 144) comprises at least one elastomer pad (304); and
the at least one vibration isolation portion comprises a portion of the at least one elastomer pad (304) located radially outwardly of the base portion.

11. The power hand tool of claim 10, wherein the at least one elastomer pad (304) comprises:
a plurality of elastomer bars (454), each of the plurality of elastomer bars (454) extending lengthwise along the working shaft axis.

12. The power hand tool of claim 10, wherein the at least one elastomer pad (304) comprises:
a plurality of elastomer bars (454), each of the plurality of elastomer bars (454) extending lengthwise in a non-parallel direction to the working shaft axis.

13. The power hand tool of claim 10, wherein the at least one elastomer pad (304) comprises:
a plurality of elastomer cylinders (538, 540), each of the plurality of elastomer cylinders (538, 540) extending lengthwise generally away from the working shaft axis.

14. The power hand tool of claim 10, wherein the at least one elastomer pad (304) comprises:
a first plurality of bars (454), each of the first plurality of bars (454) having a first end portion operably connected to the housing (102) and a second end portion operably connected to the grip member (124); and
a second plurality of bars (454), each of the second plurality of bars (454) having a third end portion operably connected to one of the housing (102) and the grip member (124), and a fourth end portion spaced apart from the other of the housing (102) and the grip member (124).

15. The power hand tool of claim 14, further comprising:
a plurality of ribs extending outwardly from the housing (102), each of the plurality of ribs positioned between a respective first and a respective second of the second plurality of bars (454).

16. The power hand tool of claim 10, further comprising:
a first layer of metal bonded to an inner surface of the at least one elastomer pad (304); and
a second layer of metal bonded to an outer surface of the at least one elastomer pad (304).

17. The power hand tool of claim 16, wherein the grip member (124) comprises:
a first clamshell portion configured to mate with a first of the at least one elastomer pad (304)s; and
a second clamshell portion configured to mate with the first clamshell portion and with a second of the at least one elastomer pad (304)s.

18. The power hand tool of claim 1, further comprising:
an activation button, the activation button configured to selectively couple and decouple the grip member (124) to the housing (102).

19. The power hand tool of claim 1, further comprising:
at least one lever arm pivotably supported by the grip member (124) and movable between a first position whereat the lever arm compresses the at least one vibration isolation portion by a first amount and a second position whereat the lever arm compresses the at least one vibration isolation portion by a second amount, the second amount less than the first amount.

20. The power hand tool of claim 1, wherein:
the vibration isolation potion is configured such that as the housing (102) moves in the at least one direction from a first position to a second position the at least one isolation portion exhibits a first damping characteristic;
the vibration isolation potion is further configured such that as the housing (102) moves in the at least one direction from the second position to a third position the at least one isolation portion exhibits a second damping characteristic; and
the second damping characteristic is greater than the first damping characteristic.

## Patentansprüche

1. Kraftbetriebenes Handwerkzeug (100), das Folgendes aufweist:
ein Gehäuse (102) mit einer Arbeitswelle; und
eine Schwingungsisolierungsanordnung, wobei die Schwingungsisolierungsanordnung aufweist:
mindestens ein Basiselement (142, 144) mit einem Basisabschnitt, der in Bezug auf das Gehäuse (102) fixiert ist,
mindestens einen Schwingungsisolierungsabschnitt mit einem ersten Abschnitt, der mit dem mindestens einen Basiselement (142, 144) wirkverbunden ist, wobei der mindestens eine Schwingungsisolierungsabschnitt ausgestaltet ist, Schwingung in mindestens einer Richtung zu isolieren, und ein Greifelement (124), das in einem vorderen Abschnitt (108) des Gehäuses (102) beinhaltet ist, das eine Außenfläche, die ausgestaltet ist, durch einen Benutzer ergriffen zu werden, und eine Innenfläche, die mit einem äußeren Abschnitt des mindestens einen Schwingungsisolierungsabschnitts wirkverbunden ist, aufweist, wobei das Greifelement (124) einen Schlitten (140) aufweist, wobei der Schlitten (140) durch das Gehäuse (102) durch zwei Basiselemente in der Form von Bolzen (142, 144), die starr mit dem Gehäuse (102) verbunden sind, gehalten ist, wobei die Bolzen (142, 144) durch eine jeweilige einen hinteren Isolator haltende Scheibe (146, 148) verlaufen, von denen jede fest mit einem jeweiligen hinteren Isolator (150, 152) verbunden ist, wobei die Isolatoren (150, 152) in einem hinteren Isolatorhohlraum (154) angeordnet sind, wobei die den hinteren Isolator haltenden Scheiben (146, 148) ausgelegt sind, sich entlang einer Arbeitswellenachse zu bewegen und eine Kraft gegen die hinteren Isolatoren (150, 152) aufzubringen, und wobei das Greifelement (124) mit einer äußeren radialen Fläche der Isolatoren (150, 152) wirkverbunden ist.

2. Kraftbetriebenes Handwerkzeug nach Anspruch 1, das ferner aufweist:
ein erstes Element, das fest durch den mindestens einen Bolzen (142, 144) gehalten und ausgestaltet ist, auf eine erste Seite des mindestens einen Isolators (150, 152) zu wirken, während sich der mindestens eine Bolzen (142, 144) nach vorn entlang der Arbeitswellenachse bewegt; und
ein zweites Element, das fest durch den mindestens einen Bolzen (142, 144) gehalten und ausgestaltet ist, auf eine zweite Seite des mindestens einen Isolators (150, 152) zu wirken, während sich der mindestens eine Bolzen (142, 144) nach hinten entlang der Arbeitswellenachse bewegt.

3. Kraftbetriebenes Handwerkzeug nach Anspruch 2, wobei der mindestens eine Isolator (150, 152) aus einem einzelnen Isolator (150, 152) besteht.

4. Kraftbetriebenes Handwerkzeug nach Anspruch 3, wobei der einzelne Isolator (150, 152) eine Feder umfasst.

5. Kraftbetriebenes Handwerkzeug nach Anspruch 2, das ferner aufweist:
mindestens eine Stellschraube, die ausgestaltet ist, einen Druck des mindestens einen Isolators (150, 152) zu ändern.

6. Kraftbetriebenes Handwerkzeug nach Anspruch 2, wobei:
der mindestens eine Isolator (150, 152) einen ersten und einen zweiten Isolator (150, 152) umfasst, die axial entlang der Arbeitswellenachse ausgerichtet sind;
das erste Element ausgestaltet ist, auf eine hintere Seite des ersten Isolators (150, 152) zu wirken, während sich der mindestens eine Bolzen (142, 144) nach vorn entlang der Arbeitswellenachse bewegt; und
das zweite Element ausgestaltet ist, auf eine vordere Seite des zweiten Isolators (150, 152) zu wirken, während sich der mindestens eine Bolzen (142, 144) nach hinten entlang der Arbeitswellenachse bewegt.

7. Kraftbetriebenes Handwerkzeug nach Anspruch 1, wobei:
das mindestens eine Basiselement (142, 144) mindestens einen Bolzen (142, 144) mit einem ersten Ende aufweist, das fest durch das Gehäuse (102) gehalten ist;
der mindestens eine Schwingungsisolierungsabschnitt mindestens eine Elastomerröhre (512, 514) aufweist, die um den mindestens einen Bolzen (142, 144) angeordnet ist; und
das Greifelement (124) mit einem äußeren radialen Flächenabschnitt der mindestens einen Elastomerröhre (512, 514) wirkverbunden ist.

8. Kraftbetriebenes Handwerkzeug nach Anspruch 7, wobei:
eine Innenfläche der mindestens einen Elastomerröhre (512, 514) um den mindestens einen Bolzen (142, 144) verläuft; und
mindestens eine Bohrung (516) in der mindestens einen Elastomerröhre (512, 514) zwischen der Innenfläche und dem äußeren radialen Flächenabschnitt verläuft.

9. Kraftbetriebenes Handwerkzeug nach Anspruch 7, wobei:
die mindestens eine Elastomerröhre (512, 514) an den mindestens einen Bolzen (142, 144) gebunden ist;
eine Röhre an den äußeren radialen Flächenabschnitt gebunden ist;
der mindestens eine Bolzen (142, 144) in das Gehäuse (102) eingepresst ist; und
die Röhre in eine aufnehmende Bohrung (516) in dem Greifelement (124) eingepresst ist.

10. Kraftbetriebenes Handwerkzeug nach Anspruch 1, wobei:
das mindestens eine Basiselement (142, 144) mindestens einen Elastomerblock (304) aufweist; und
der mindestens eine Schwingungsisolierungsabschnitt einen Abschnitt des mindestens einen Elastomerblocks (304) umfasst, der sich radial von dem Basisabschnitt nach außen befindet.

11. Kraftbetriebenes Handwerkzeug nach Anspruch 10, wobei der mindestens eine Elastomerblock (304) aufweist:
eine Mehrzahl von Elastomerstegen (454), wobei jeder der Mehrzahl von Elastomerstegen (454) in Längsrichtung entlang der Arbeitswellenachse verläuft.

12. Kraftbetriebenes Handwerkzeug nach Anspruch 10, wobei der mindestens eine Elastomerblock (304) aufweist:
eine Mehrzahl von Elastomerstegen (454), wobei jeder der Mehrzahl von Elastomerstegen (454) in Längsrichtung in einer nicht parallelen Richtung zu der Arbeitswellenachse verläuft.

13. Kraftbetriebenes Handwerkzeug nach Anspruch 10, wobei der mindestens eine Elastomerblock (304) aufweist:
eine Mehrzahl von Elastomerzylindern (538, 540), wobei jeder der Mehrzahl von Elastomerzylindern (538, 540) in Längsrichtung im Allgemeinen weg von der Arbeitswellenachse verläuft.

14. Kraftbetriebenes Handwerkzeug nach Anspruch 10, wobei der mindestens eine Elastomerblock (304) aufweist:
eine erste Mehrzahl von Stegen (454), wobei jeder der ersten Mehrzahl von Stegen (454) einen ersten Endabschnitt, der mit dem Gehäuse (102) wirkverbunden ist, und einen zweiten Endabschnitt, der mit dem Greifelement (124) wirkverbunden ist, aufweist; und
eine zweite Mehrzahl von Stegen (454), wobei jeder der zweiten Mehrzahl von Stegen (454) einen dritten Endabschnitt, der mit einem des Gehäuses (102) und des Greifelements (124) wirkverbunden ist, und einen vierten Endabschnitt, der von dem anderen des Gehäuses (102) und des Greifelements (124) beabstandet ist, aufweist.

15. Kraftbetriebenes Handwerkzeug nach Anspruch 14, das ferner aufweist:
eine Mehrzahl von Rippen, die von dem Gehäuse (102) nach außen verlaufen, wobei jede der Mehrzahl von Rippen zwischen einem jeweiligen ersten und einem jeweiligen zweiten der zweiten Mehrzahl von Stegen (454) angeordnet ist.

16. Kraftbetriebenes Handwerkzeug nach Anspruch 10, das ferner aufweist:
eine erste Lage von Metall, die an eine Innenfläche des mindestens einen Elastomerblocks (304) gebunden ist; und
eine zweite Lage von Metall, die an eine Außenfläche des mindestens einen Elastomerblocks (304) gebunden ist.

17. Kraftbetriebenes Handwerkzeug nach Anspruch 16, wobei das Greifelement (124) aufweist:
einen ersten Schalenabschnitt, der ausgestaltet ist, mit einem ersten des mindestens einen Elastomerblocks (304) zusammenzupassen; und
einen zweiten Schalenabschnitt, der ausgestaltet ist, mit dem ersten Schalenabschnitt und mit einem zweiten des mindestens einen Elastomerblocks (304) zusammenzupassen.

18. Kraftbetriebenes Handwerkzeug nach Anspruch 1, das ferner aufweist:
eine Aktivierungstaste, wobei die Aktivierungstaste ausgestaltet ist, das Greifelement (124) mit dem Gehäuse (102) gezielt zu koppeln und von diesem zu entkoppeln.

19. Kraftbetriebenes Handwerkzeug nach Anspruch 1, das ferner aufweist:
mindestens einen Hebelarm, der schwenkbar durch das Greifelement (124) gehalten und zwischen einer ersten Position, in der der Hebelarm den mindestens einen Schwingungsisolierungsabschnitt um einen ersten Betrag zusammendrückt, und einer zweiten Position, in der der Hebelarm den mindestens einen Schwingungsisolierungsabschnitt um einen zweiten Betrag zusammendrückt, bewegbar ist, wobei der zweite Betrag kleiner als der erste Betrag ist.

20. Kraftbetriebenes Handwerkzeug nach Anspruch 1, wobei:
der Schwingungsisolierungsabschnitt derart ausgestaltet ist, dass, während sich das Gehäuse (102) in die mindestens eine Richtung von einer ersten Position zu einer zweiten Position bewegt, der mindestens eine Isolierungsabschnitt eine erste Dämpfungscharakteristik aufweist;
der Schwingungsisolierungsabschnitt ferner derart ausgestaltet ist, dass, während sich das Gehäuse (102) in die mindestens eine Richtung von der zweiten Position zu einer dritten Position bewegt, der mindestens eine Isolierungsabschnitt eine zweite Dämpfungscharakteristik aufweist; und
die zweite Dämpfungscharakteristik größer als die erste Dämpfungscharakteristik ist.

## Revendications

1. Outil à main électrique (100), comprenant :
un carter (102) contenant un arbre de travail ; et
un ensemble d'isolement de vibrations, l'ensemble d'isolement de vibrations comprenant
au moins un élément de base (142, 144) comprenant une partie de base fixée par rapport au carter (102),
au moins une partie d'isolement de vibrations comprenant une première partie reliée de manière fonctionnelle à l'au moins un élément de base (142, 144), l'au moins une partie d'isolement de vibrations étant configurée pour isoler les vibrations dans au moins une direction, et
un élément de prise (124) compris dans une partie avant (108) du carter (102) ayant une surface extérieure configurée pour être saisie par un utilisateur, et une surface intérieure reliée de manière fonctionnelle à une partie extérieure de l'au moins une partie d'isolement de vibrations, l'élément de prise (124) comprenant un chariot (140), le chariot (140) étant supporté par le carter (102) par deux éléments de base sous la forme de broches (142, 144) qui sont reliées de manière rigide au carter (102), les broches (142, 144) s'étendant à travers un isolateur de support de rondelle arrière respectif (146, 148), dont chacun est relié de manière fixe à un isolateur arrière respectif (150, 152), les isolateurs (150, 152) étant positionnés dans une cavité d'isolateur arrière (154), les isolateurs de support de rondelle arrière (146, 148) étant adaptés pour se déplacer le long d'un axe d'arbre de travail et générer une force contre les isolateurs arrières (150, 152), et l'élément de prise (124) étant relié de manière fonctionnelle à une surface radiale extérieure des isolateurs (150, 152).

2. Outil à main électrique selon la revendication 1, comprenant en outre :
un premier élément supporté de manière fixe par l'au moins une broche (142, 144) et configuré pour agir sur un premier côté de l'au moins un isolateur (150, 152) lorsque l'au moins une broche (142, 144) se déplace vers l'avant le long de l'axe d'arbre de travail ; et
un deuxième élément supporté de manière fixe par l'au moins une broche (142, 144) et configuré pour agir sur un deuxième côté de l'au moins un isolateur (150, 152) lorsque l'au moins une broche (142, 144) se déplace vers l'arrière le long de l'axe d'arbre de travail.

3. Outil à main électrique selon la revendication 2, l'au moins un isolateur (150, 152) étant constitué d'un isolateur unique (150, 152).

4. Outil à main électrique selon la revendication 3, l'isolateur unique (150, 152) comprenant un ressort.

5. Outil à main électrique selon la revendication 2, comprenant en outre :
au moins une vis de réglage configurée pour modifier la compression de l'au moins un isolateur (150, 152).

6. Outil à main électrique selon la revendication 2,
l'au moins un isolateur (150, 152) comprenant un premier et un deuxième isolateur (150, 152) alignés de manière axiale le long de l'axe d'arbre de travail ;
le premier élément étant configuré pour agir sur un côté arrière du premier isolateur (150, 152) lorsque l'au moins une broche (142, 144) se déplace vers l'avant le long de l'axe d'arbre de travail ; et
le deuxième élément étant configuré pour agir sur un côté avant du deuxième isolateur (150, 152) lorsque l'au moins une broche (142, 144) se déplace vers l'arrière le long de l'axe d'arbre de travail.

7. Outil à main électrique selon la revendication 1,
l'au moins un élément de base (142, 144) comprenant au moins une broche (142, 144) ayant une première extrémité supportée de manière fixe par le carter (102) ;
l'au moins une partie d'isolement de vibrations comprenant au moins un tube en élastomère (512, 514) positionné autour de l'au moins une broche (142, 144) ; et
l'élément de prise (124) étant relié de manière fonctionnelle à une partie de surface radiale extérieure de l'au moins un tube en élastomère (512, 514) .

8. Outil à main électrique selon la revendication 7,
une surface intérieure de l'au moins un tube en élastomère (512, 514) s'étendant autour de l'au moins une broche (142, 144) ; et
au moins un alésage (516) s'étendant dans l'au moins un tube élastomère (512, 514) entre la surface intérieure et la partie de surface radiale extérieure.

9. Outil à main électrique selon la revendication 7,
l'au moins un tube en élastomère (512, 514) étant lié à l'au moins une broche (142, 144) ;
un tube étant lié à la partie de surface radiale extérieure ;
l'au moins une broche (142, 144) étant ajustée par pression dans le carter (102) ; et
le tube étant ajusté par pression dans un alésage de réception (516) dans l'élément de prise (124).

10. Outil à main électrique selon la revendication 1,
l'au moins un élément de base (142, 144) comprenant au moins un coussinet élastomère (304) ; et
l'au moins une partie d'isolement de vibrations comprenant une partie de l'au moins un coussinet élastomère (304) situé radialement vers l'extérieur de la partie de base.

11. Outil à main électrique selon la revendication 10, l'au moins un coussinet élastomère (304) comprenant :
une pluralité de barres élastomères (454), chacune de la pluralité de barres élastomères (454) s'étendant de manière longitudinale le long de l'axe d'arbre de travail.

12. Outil à main électrique selon la revendication 10, l'au moins un coussinet élastomère (304) comprenant :
une pluralité de barres élastomères (454), chacune de la pluralité de barres élastomères (454) s'étendant de manière longitudinale dans une direction non parallèle à l'axe d'arbre de travail.

13. Outil à main électrique selon la revendication 10, l'au moins un coussinet élastomère (304) comprenant :
une pluralité de cylindres élastomères (538, 540), chacun de la pluralité de cylindres élastomères (538, 540) s'étendant généralement de manière longitudinale à l'opposé de l'axe d'arbre de travail.

14. Outil à main électrique selon la revendication 10, l'au moins un coussinet élastomère (304) comprenant :
une première pluralité de barres (454), chacune de la première pluralité de barres (454) ayant une première partie d'extrémité reliée de manière fonctionnelle au carter (102) et une deuxième partie d'extrémité reliée de manière fonctionnelle à l'élément de prise (124) ; et
une deuxième pluralité de barres (454), chacune de la deuxième pluralité de barres (454) ayant une troisième partie d'extrémité reliée de manière fonctionnelle à un élément parmi le carter (102) et l'élément de prise (124), et une quatrième partie d'extrémité espacée de l'autre élément parmi le carter (102) et l'élément de prise (124).

15. Outil à main électrique selon la revendication 14, comprenant en outre :
une pluralité de nervures s'étendant vers l'extérieur à partir du carter (102), chacune de la pluralité de nervures étant positionnée entre une première et une deuxième nervure respective de la deuxième pluralité de barres (454).

16. Outil à main électrique selon la revendication 10, comprenant en outre :
une première couche de métal liée à une surface intérieure de l'au moins un coussinet élastomère (304) ; et
une deuxième couche de métal liée à une surface extérieure de l'au moins un coussinet élastomère (304).

17. Outil à main électrique selon la revendication 16, l'élément de prise (124) comprenant :
une première partie de coque configurée pour s'accoupler avec un premier de l'au moins un coussinet élastomère (304) ; et
une deuxième partie de coque configurée pour s'accoupler avec la première partie de coque et avec un deuxième de l'au moins un coussinet élastomère (304).

18. Outil à main électrique selon la revendication 1, comprenant en outre :
un bouton d'activation, le bouton d'activation étant configuré pour coupler et découpler sélectivement l'élément de prise (124) du carter (102).

19. Outil à main électrique selon la revendication 1, comprenant en outre :
au moins un bras de levier supporté de manière pivotante par l'élément de prise (124) et pouvant être déplacé entre une première position dans laquelle le bras de levier comprime l'au moins une partie d'isolement de vibrations selon une première amplitude et une deuxième position dans laquelle le bras de levier comprime l'au moins une partie d'isolement de vibrations selon une deuxième amplitude, la deuxième amplitude étant inférieure à la première amplitude.

20. Outil à main électrique selon la revendication 1,
la partie d'isolement de vibrations étant configurée de telle sorte que lorsque le carter (102) se déplace dans au moins une direction à partir d'une première position jusqu'à une deuxième position, l'au moins une partie d'isolement présente une première caractéristique d'amortissement ;
la partie d'isolement de vibrations étant en outre configurée de telle sorte que lorsque le carter (102) se déplace dans l'au moins une direction à partir de la deuxième position jusqu'à une troisième position, l'au moins une partie d'isolement présente une deuxième caractéristique d'amortissement ; et
la deuxième caractéristique d'amortissement étant supérieure à la première caractéristique d'amortissement.
